# DEMANDE DE BREVET EUROPEEN

(11) **EP 3 863 219 A1**
(43) Date de publication de la demande: **11.08.2021**
(21) Numéro de dépôt: 21152996.1
(22) Date de dépôt: 22.01.2021
(51) Int. Cl.: H04L 9/32

(54) **PROCÉDÉ ET DISPOSITIF D'ÉVALUATION DE CORRESPONDANCE D'ENSEMBLES DE DONNÉES STRUCTURÉES PROTÉGÉES PAR LE CHIFFREMENT**

(30) Priorité: 06.02.2020 FR 2001187
(71) Demandeur: Cosmian Tech, 75008 Paris (FR)
(72) Inventeur: GRIEDER, Bruno, 92110 Clichy (FR); NITULESCU, Anca, 75009 Paris (FR); SARTORI, Michele, 75013 Paris (FR)
(74) Mandataire: Dupuis-Latour, Dominique

(57) **Abrégé**

L'invention concerne une manière sûre et fiable de vérifier et de combiner des données provenant de sources de données différentes. En particulier, l'invention concerne la restriction des opérations d'évaluation de correspondance d'ensembles de données structurées et de combinaison de ces ensembles de données structurées à des clients spécifiques, et la protection des identifiants utilisés pour les opérations d'évaluation de correspondance et de combinaison de sorte que les clients ne puissent accéder aux identifiants en clair.

## Description

### CONTEXTE DE L'INVENTION

### Domaine de l'invention

La présente invention concerne une manière sûre et fiable de vérifier et de combiner des données provenant de sources de données différentes. En particulier, l'invention concerne la restriction des opérations d'évaluation de correspondance d'ensembles de données structurées et de combinaison de ces ensembles de données structurées à des clients spécifiques, et la protection des identifiants utilisés pour les opérations d'évaluation de correspondance et de combinaison de sorte que les clients ne puissent accéder aux identifiants en clair.

### Description de la technique antérieure

Aujourd'hui, du fait de la connectivité accrue des données, des fournisseurs de services et du stockage distribué des informations, il est nécessaire de sécuriser l'échange des informations entre fournisseurs de données et leur stockage chez des tiers. En particulier, il est de plus en plus nécessaire qu'un tiers (également dénommé "client", "dispositif client" ou "consommateur de données") puisse accéder à des données provenant de différentes sources, stockées auprès de différents fournisseurs de données (également dénommé "dispositif source de données").

Dans un cas de figure fréquent, un client souhaite récupérer des données provenant de dispositifs source de données différents et vérifier si ces dispositifs source différents ont stocké des données relatives à un même identifiant, par exemple relatives à un individu spécifique. Par exemple, cette opération d'évaluation de correspondance peut être utilisée pour vérifier la solvabilité d'une personne en comparant des informations d'origines différentes (par exemple des informations bancaires, d'assurance, des registres officiels, etc.).

Il peut de plus être souhaitable de combiner les données provenant des différents dispositifs source de données pour obtenir un ensemble de données enrichi incluant ces diverses données. Dans le contexte des bases de données, une telle combinaison de données est dénommée opération de "jointure". Dans une opération de jointure, des tables différentes, par exemple des ensembles de données issus de dispositifs source différents, sont combinés au moyen d'une comparaison d'une ou plusieurs colonnes spécifiques, également dénommée "identifiant" ou "clé de jointure".

Dans cette manière de procéder, un problème tient au fait que les identifiants utilisés pour effectuer la combinaison contiennent souvent des informations sensibles, voire personnelles. Par exemple, le numéro de sécurité sociale d'une personne peut être utilisé pour retrouver des informations auprès d'une banque ou d'une compagnie d'assurance : dans un tel cas, les données bancaires et les contrats d'assurance ne recèlent, en eux-mêmes, aucune information personnelle, mais l'identifiant utilisé pour combiner ces deux données comprend des informations sensibles qui permettent d'identifier un individu de façon non ambigüe. De fait, et en raison des contraintes de plus en plus sévères de protection des données personnelles, ces identifiants ne doivent pas pouvoir parvenir au client (le consommateur de données), en clair.

La plupart des techniques couramment utilisées pour protéger les identifiants sensibles sont basées sur l'application d'une fonction de hachage, le chiffrement déterministe ou le salage, c'est-à-dire l'application d'un aléa sur les identifiants. Une fonction de hachage consiste à appliquer une fonction à sens unique qui, à partir de données de taille arbitraire et souvent de grande taille va renvoyer des valeurs de taille limitée ou fixe appelées "empreintes numériques". Dans certaines configurations, une donnée aléatoire (appelée "sel") est utilisée comme entrée additionnelle d'une fonction de hachage à sens unique qui transforme les identifiants pour les protéger à l'encontre d'attaques tierces de type "dictionnaire". Avec cette technique, un dispositif source de données peut générer des identifiants protégés sans que le client n'y ait accès en clair et ce dernier peut, tout de même, vérifier si ces identifiants protégés sont présents dans des ensembles de données d'un ou plusieurs dispositifs source de données. Cependant, avec cette technique, les identifiants ne sont pas protégés à l'encontre d'attaques de type dictionnaire provenant d'autres dispositifs source de données. Un autre inconvénient des techniques classiques est que, aujourd'hui, tout tiers ayant accès aux identifiants peut exécuter une opération de combinaison (aussi appelée "opération de jointure"), dans la mesure où cette opération n'est pas limitée à des clients spécifiques. De plus, avec ces techniques connues, un dispositif source de données peut également usurper l'identité d'autres dispositifs source de données et générer des données à leur place.

Les US 2018/081960 A1 et US 2015/082399 A1 décrivent de telles techniques connues, mais qui présentent l'inconvénient de ne pas permettre de déterminer, à partir d'empreintes numériques chiffrées, si des valeurs (en clair) de deux identifiants respectivement représentés par ces empreintes chiffrées sont identiques ou non, sans pour autant avoir accès à ces identifiants en clair.

### RÉSUMÉ DE L'INVENTION

Le but de l'invention est de remédier aux inconvénients des techniques antérieures.

Ce but est atteint par un procédé d'évaluation de correspondance d'un premier ensemble de données structurées provenant d'un premier dispositif source de données avec un deuxième ensemble de données structurées provenant d'un deuxième dispositif source de données, mis en œuvre dans un dispositif client, comprenant les étapes suivantes :
a. échange d'une clé de chiffrement entre le dispositif client, le premier dispositif source de données et le deuxième dispositif source de données ;
b. réception du premier ensemble de données structurées provenant du premier dispositif source de données, le premier ensemble de données structurées comprenant une première empreinte numérique chiffrée générée à partir d'une première empreinte numérique et de la clé de chiffrement, la première empreinte numérique étant générée à partir d'un premier identifiant en clair et d'une clé secrète qui est partagée entre le premier et le deuxième dispositif source de données ;
c. réception du deuxième ensemble de données structurées provenant du deuxième dispositif source de données, le deuxième ensemble de données structurées comprenant une deuxième empreinte numérique chiffrée générée à partir d'une deuxième empreinte numérique et de la clé de chiffrement, la deuxième empreinte numérique étant générée à partir d'un deuxième identifiant en clair et de la clé secrète partagée ;
d. comparaison de la première empreinte numérique chiffrée du premier ensemble de données structurées avec la deuxième empreinte numérique chiffrée du deuxième ensemble de données structurées afin de déterminer si le premier identifiant en clair est identique au deuxième identifiant en clair sans avoir accès au premier et au deuxième identifiants en clair, la première empreinte numérique chiffrée du premier ensemble de données structurées ayant une valeur différente de la deuxième empreinte numérique chiffrée du deuxième ensemble de données structurées.

La clé de chiffrement peut être une clé publique du dispositif client.

L'étape de comparaison peut alors être basée sur le déchiffrement de la première empreinte numérique chiffrée du premier ensemble de données structurées et de la deuxième empreinte numérique chiffrée du deuxième ensemble de données structurées au moyen d'une clé privée du dispositif client.

La clé de chiffrement peut également comprendre une première clé symétrique échangée entre le dispositif client et le premier dispositif source de données et une deuxième clé symétrique échangée entre le dispositif client et le deuxième dispositif source de données. La clé de chiffrement utilisée pour générer la première empreinte numérique chiffrée du premier ensemble de données structurées peut être la première clé symétrique, et la clé de chiffrement utilisée pour générer la deuxième empreinte numérique chiffrée du deuxième ensemble de données structurées peut être la deuxième clé symétrique.

L'étape de comparaison peut dans ce cas être basée sur le déchiffrement de la première empreinte numérique chiffrée du premier ensemble de données structurées au moyen de la première clé symétrique et sur le déchiffrement de la deuxième empreinte numérique chiffrée du deuxième ensemble de données structurées au moyen de la deuxième clé symétrique.

La clé de chiffrement peut également être une clé symétrique partagée entre le dispositif client, le premier dispositif source de données et le deuxième dispositif source de données. La première empreinte numérique chiffrée du premier ensemble de données structurées peut être alors en outre générée à partir d'une première valeur aléatoire et le premier ensemble de données structurées peut comprendre en outre la première valeur aléatoire, et la deuxième empreinte numérique chiffrée du deuxième ensemble de données structurées peut être en outre générée à partir d'une deuxième valeur aléatoire et le deuxième ensemble de données structurées peut comprendre en outre la deuxième valeur aléatoire. L'étape de comparaison peut être alors réalisée au moyen de la première et de la deuxième valeurs aléatoires.

Dans ce cas, l'étape de comparaison peut être basée sur le déchiffrement de la première empreinte numérique chiffrée du premier ensemble de données structurées au moyen de la première valeur aléatoire et de la clé symétrique partagée, et sur le déchiffrement de la deuxième empreinte numérique chiffrée du deuxième ensemble de données structurées au moyen de la deuxième valeur aléatoire et de la clé symétrique partagée.

L'étape de comparaison peut en outre être basée sur une propriété homomorphique d'un algorithme de chiffrement utilisé pour générer la première empreinte numérique chiffrée du premier ensemble de données structurées et pour générer la deuxième empreinte numérique chiffrée du deuxième ensemble de données structurées.

Dans tous les cas précédents, la première empreinte numérique peut être générée en outre à partir d'une valeur fonctionnelle donnée, cette valeur fonctionnelle donnée définissant les fonctions possibles d'utilisation de la clé secrète partagée, et la deuxième empreinte numérique peut être générée en outre à partir de la valeur fonctionnelle donnée.

L'étape de comparaison peut comprendre une opération homomorphique de la première empreinte numérique chiffrée du premier ensemble de données structurées avec la deuxième empreinte numérique chiffrée du deuxième ensemble de données structurées.

Dans ce cas, l'étape de comparaison peut comprendre en outre une opération de vérification au moyen de la clé privée du dispositif client vérifiant si le résultat de l'opération homomorphique satisfait une propriété donnée et si le résultat de l'opération homomorphique satisfait la propriété donnée alors le premier identifiant en clair est identique au deuxième identifiant en clair.

Avantageusement, dans tous les cas précédents, le premier et/ou le deuxième ensemble de données structurées peuvent comprendre en outre des données associées à la première empreinte numérique chiffrée du premier ensemble de données structurées et à la deuxième empreinte numérique chiffrée du deuxième ensemble de données structurées, le procédé comprenant alors une étape d'insertion dans un ensemble de jointure des données associées à la première empreinte numérique chiffrée du premier ensemble de données structurées et/ou des données associées à la deuxième empreinte numérique chiffrée du deuxième ensemble de données structurées lorsque le résultat de l'étape de comparaison détermine que le premier identifiant en clair est identique au deuxième identifiant en clair.

Dans ce dernier cas, l'étape d'insertion dans l'ensemble de jointure peut, en outre, insérer les données associées à la première empreinte numérique chiffrée du premier ensemble de données structurées lorsque le résultat de l'étape de comparaison détermine que le premier identifiant en clair n'est pas identique au deuxième identifiant en clair.

Dans tous les cas précédents, le premier ensemble de données structurées peut comprendre une pluralité de premières empreintes numériques chiffrées et/ou le deuxième ensemble de données structurées peut comprendre une pluralité de deuxièmes empreintes numériques chiffrées, l'étape de comparaison étant réalisée pour une ou plusieurs premières empreintes numériques chiffrées du premier ensemble de données structurées et une ou plusieurs deuxièmes empreintes numériques chiffrées du deuxième ensemble de données structurées.

Le premier ensemble de données structurées peut alors comprendre une pluralité de premières empreintes numériques chiffrées et/ou le deuxième ensemble de données structurées peut comprendre une pluralité de deuxièmes empreintes numériques chiffrées, l'étape de comparaison et l'étape d'insertion dans un ensemble de jointure étant exécutées pour une ou plusieurs premières empreintes numériques chiffrées du premier ensemble de données structurées et une ou plusieurs deuxièmes empreintes numériques chiffrées du deuxième ensemble de données structurées.

Enfin, dans tous les cas ci-dessus, les ensembles de données structurées peuvent être des tables de données ou des bases de données ; et/ou la clé secrète qui est partagée entre le premier et le deuxième dispositif source de données peut être établie en utilisant un protocole cryptographique d'échange de clé.

L'invention a également pour objet un procédé de fourniture d'un ensemble de données structurées à un dispositif client, mis en œuvre dans un dispositif source de données, le procédé comprenant les étapes suivantes :
i. échange d'une clé de chiffrement entre le dispositif client, le dispositif source de données et un deuxième dispositif source de données ;
ii. création d'une empreinte numérique à partir d'un identifiant en clair et d'une clé secrète qui est partagée avec le deuxième dispositif source de données ;
iii. génération d'une empreinte numérique chiffrée à partir de l'empreinte numérique et de la clé de chiffrement ; et
iv. envoi au dispositif client d'un ensemble de données structurées comprenant l'empreinte numérique chiffrée afin de réaliser une évaluation de correspondance avec un autre ensemble de données structurées provenant du deuxième dispositif source de données.

Selon diverses possibilités de mise en œuvre de ce procédé :
la clé de chiffrement est une clé publique du dispositif client ;
la clé de chiffrement comprend une clé symétrique partagée entre le dispositif client et le dispositif source de données, la clé de chiffrement utilisée pour générer l'empreinte numérique chiffrée de l'ensemble de données structurées étant la clé symétrique ;
la clé de chiffrement est une clé symétrique partagée entre le dispositif client et le dispositif source de données, l'empreinte -numérique chiffrée de l'ensemble de données structurées étant en outre généré à partir d'une valeur aléatoire et l'ensemble de données structurées comprend en outre la valeur aléatoire ;
l'ensemble de données structurées comprend une pluralité d'empreintes numériques chiffrées ;
l'ensemble de données structurées comprend en outre des données associées à l'empreinte numérique chiffrée.

L'invention a également pour objet un dispositif configuré pour mettre en œuvre l'un des procédés précédemment décrit.

### DESCRIPTION SOMMAIRE DES DESSINS

On va maintenant décrire un exemple de réalisation de la présente invention en référence aux dessins annexés où les mêmes références désignent d'une figure à l'autre des éléments identiques ou fonctionnellement semblables :
- [Fig.1]: illustre une opération de jointure selon la technique antérieure.
- [Fig.2]: illustre la création d'un secret commun entre deux dispositifs source de données.
- [Fig.3]: illustre le procédé d'évaluation d'ensembles de données structurées reçus de dispositifs source de données et de combinaison de ces ensembles de données structurées selon un premier mode de réalisation de l'invention.
- [Fig.4]: illustre le procédé d'évaluation d'ensembles de données structurées reçus de dispositifs source de données et de combinaison de ces ensembles de données structurées selon un deuxième mode de réalisation.
- [Fig.5]: illustre le procédé d'évaluation d'ensembles de données structurées reçus de dispositifs source de données et de combinaison de ces ensembles de données structurées selon un troisième mode de réalisation.
- [Fig.6]: illustre, selon un exemple, les opérations effectuées au niveau de chaque dispositif source de données selon le premier mode de réalisation.
- [Fig.7]: illustre, selon un exemple, les opérations effectuées au niveau du dispositif client de données selon le premier mode de réalisation.

### DESCRIPTION DÉTAILLÉE D'UN MODE DE RÉALISATION

### PRÉFÉRENTIEL DE L'INVENTION

L'invention concerne la manière d'assurer de façon sécurisée et fiable l'évaluation de correspondance et la combinaison d'ensembles de données structurées provenant de différents dispositifs source de données. En particulier l'invention concerne la manière de restreindre des opérations d'évaluation de correspondance et de combinaison d'ensembles de données structurées à des dispositifs client spécifiques, et de protéger l'information ou les informations utilisées pour ces opérations, par exemple un ou plusieurs identifiants, de telle sorte que le dispositif client ne puisse pas accéder aux informations en clair, par exemple aux identifiants en tant que tels. Ainsi, la solution selon la présente invention procure les deux garanties suivantes en termes de sécurité : 1°) l'absence d'accès aux informations en clair (par exemple, aux identifiants) par un dispositif client et 2°) le contrôle au moyen de techniques cryptographiques, des dispositifs client pouvant effectuer des opérations (par exemple l'évaluation de correspondance, la combinaison, etc.) sur les informations utilisées pour ces opérations (par exemple, les identifiants) et/ou sur les données qui leur sont associées.

Pour obtenir ces garanties de sécurité, l'invention utilise les propriétés du chiffrement fonctionnel. Le chiffrement fonctionnel est une technique cryptographique qui permet à des entités d'exécuter des opérations spécifiques sur des données chiffrées, et d'obtenir le résultat de ces opérations par utilisation d'une clé spécifique sans avoir accès aux données en clair. Le chiffrement fonctionnel généralise le chiffrement par clé publique de la manière suivante : un chiffrement d'un message m, avec une clé de déchiffrement fonctionnel associée à la fonction f, délivre en sortie la valeur f(m) sans révéler d'autre information sur le message chiffré m. Le chiffrement fonctionnel permet d'évaluer des entrées chiffrées et donne accès au résultat en clair, mais ne révèle jamais en clair les entrées du calcul ni les valeurs intermédiaires. L'exécution de calculs sur les données et l'obtention des résultats de ces calculs n'est possible que pour des entités autorisées par une autorité qui génère les clés spécifiques associées aux calculs spécifiques.

Le protocole de chiffrement selon la présente invention comprend essentiellement :
l'anonymisation de l'information et/ou des informations utilisées pour la réalisation du procédé d'évaluation de correspondance et de combinaison de données, par exemple de l'identifiant ou des identifiants, par utilisation d'une fonction de hachage de façon à créer des empreintes numériques de ces informations qui sont résistantes aux collisions, et qui empêchent des attaques de type dictionnaire sur les empreintes numériques et évitent l'accès aux informations en clair par un dispositif client ;
le chiffrement des empreintes numériques, par utilisation soit d'un chiffrement par clé publique (en pratique, plus coûteux) soit d'un chiffrement (symétrique) par clé secrète (randomisée) (très efficace).

Dans les mécanismes de chiffrement par clé publique, également appelés mécanismes de chiffrement asymétrique, deux clés différentes sont utilisées pour effectuer le chiffrement et le déchiffrement. Le processus de chiffrement est public, c'est-à-dire que n'importe qui peut utiliser la clé publique du destinataire pour chiffrer les données. Le processus de déchiffrement est privé, c'est-à-dire que seul le destinataire véritable, qui possède la clé secrète associée (clé de déchiffrement) peut déchiffrer les textes chiffrés qui ont été chiffrés avec la clé publique.

Dans les mécanismes de chiffrement symétrique, à la différence des mécanismes de chiffrement par clé publique, la même clé est utilisée pour le chiffrement et pour le déchiffrement. De fait, cette clé doit rester secrète et partagée seulement entre l'expéditeur et le destinataire du message.

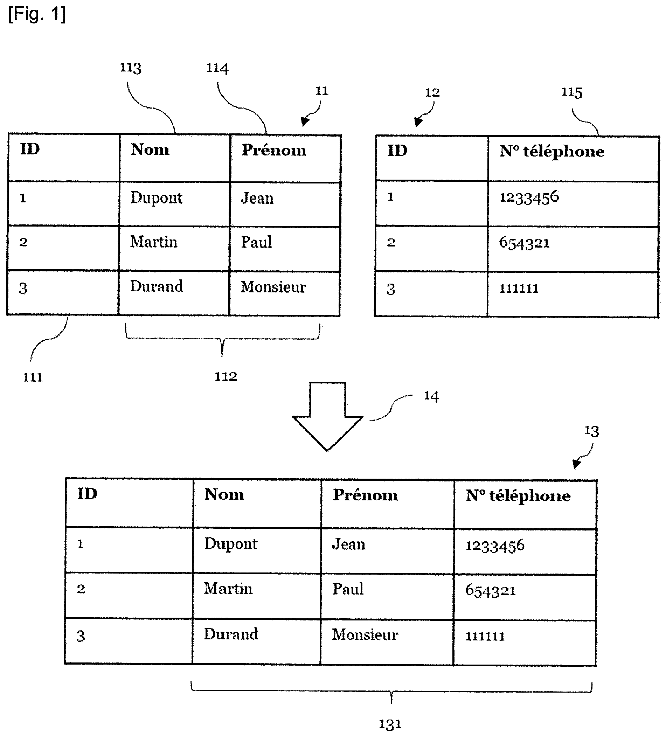

La **Figure 1** illustre une opération de combinaison (ou jointure) d'ensemble de données structurées selon la technique antérieure, en particulier une jointure entre deux ensembles de données structurées pour obtenir un ensemble de données combinées, aussi appelé ensemble de jointure. Les ensembles de données structurées sont par exemple des tables de données ou des bases de données. Cette opération de jointure est réalisée à partir d'informations de jointures, c'est-à-dire d'un ou plusieurs identifiants présents dans chacun des ensembles de données structurées.

Plusieurs types d'opérations de jointure sont connus dans la technique antérieure pour combiner des données provenant d'ensembles de données structurées différents et créer un ensemble de jointure :
la jointure (interne) : retourne les enregistrements dont les identifiants concordent dans les deux ensembles de données structurées;
la jointure (externe) gauche : retourne tous les enregistrements d'un ensemble de données structurées, par exemple la table de données illustrée à gauche sur la Figure 1, et les enregistrements concordants (c'est-à-dire ayant le ou les mêmes identifiants) de l'autre ensemble de données structurées, par exemple la table illustrée à droite sur la Figure 1 ;
la jointure (externe) droite : retourne tous les enregistrements d'un ensemble de données structurées, par exemple, la table illustrée à droite sur la Figure 1, et les enregistrements concordants (c'est-à-dire ayant le ou les mêmes identifiants) de l'autre ensemble de données structurées, par exemple, la table de données illustrée à gauche sur la Figure 1 ;
la jointure (externe) totale : retourne tous les enregistrements des ensembles de données structurées par exemple de la table illustrée à droite et de la table illustrée à la gauche de la Figure 1, avec leur concordance si cette concordance existe.

Une opération de combinaison est effectuée sur une colonne donnée ou sur un ensemble de colonnes appelées "information(s)", "information(s) de jointure", "identifiant(s)" ou, dans la terminologie des bases de données, "clés de jointure de données". Dans la suite de la description, le terme "identifiant" sera utilisé pour désigner une information permettant la correspondance entre deux ou plusieurs ensembles de données structurées. Les identifiants pouvant être, par exemple, le nom, le prénom, un numéro d'identification, etc., ils pourront être utilisés pour réaliser le procédé d'évaluation de correspondance et/ou de combinaison d'ensembles de données structurées selon l'invention.

Dans la suite de la description, il sera considéré, comme exemple de mise en œuvre de l'invention, des tables de données comme ensembles de données structurées et un identifiant comme information pour l'évaluation de correspondance et/ou de combinaison.

Dans l'exemple de la Figure 1, la table de données 11 est jointe à la table de données 12 au moyen des identifiants présents dans la colonne ID (colonne 111). Dans la mesure où, dans l'exemple spécifique illustré à la Figure 1, les tables de données 11 et 12 ont l'une et l'autre le même nombre d'enregistrements (illustré par le nombre de lignes) et les mêmes identifiants, l'exécution de l'une quelconque des quatre opérations de jointure exposées plus haut donnera le même résultat. Ce résultat est illustré par la table de données 13, aussi appelée ensemble de jointure, après l'opération de jointure 14. La table de données 11 comprend en plus d'une colonne d'identifiants ID 111, des données 112 structurées selon deux colonnes appelées respectivement "nom" 113 et "prénom" 114. Ainsi, un nom et un prénom sont associés à chaque identifiant de la colonne 111. La table de données 12 comprend en plus d'une colonne d'identifiants ID, des données 115 structurées selon une colonne appelée "numéro de téléphone". Ainsi, un numéro de téléphone est associé à chaque identifiant de la colonne ID. La table de données 13 à savoir un ensemble de jointure, comprend pour chaque identifiant de la colonne d'identifiants ID, les données 113, 114 et 115, respectivement des tables de données 11 et 12 (référence 131 sur la Figure 1).

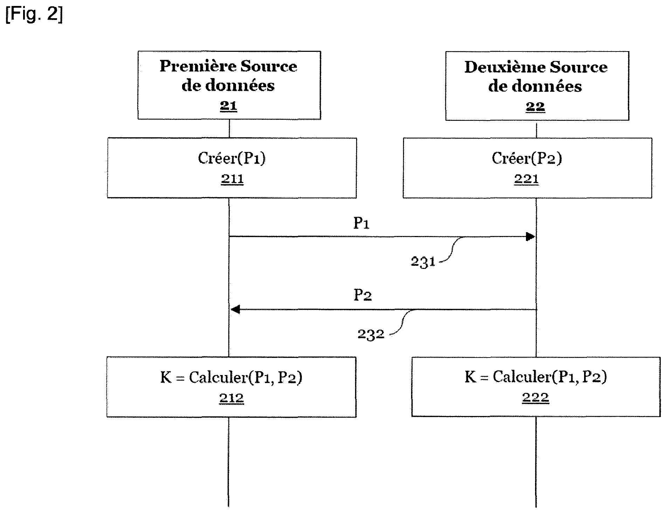

La **Figure 2** illustre un procédé de création d'un secret commun entre deux dispositifs source de données aussi appelé "clé secrète partagée" ou "secret partagé". Ce procédé est également connu sous les termes d'"échange de clés", de "distribution de clés" ou de "négociation de clés". Un échange de clés est un processus dans lequel plusieurs (par exemple deux) dispositifs conviennent d'une clé cryptographique commune, sans jamais la révéler. Ceci peut être obtenu en communiquant des clés publiques intermédiaires (protocoles interactifs) ou par publication des clés publiques dans un registre (protocoles non interactifs) et en réalisant localement par chacun des dispositifs source de données des calculs avec ces clés afin de créer une clé partagée. Cette clé partagée représente un secret partagé entre deux dispositifs source de données. Un exemple d'un mécanisme d'échange de clés très fréquemment utilisé en pratique est l'échange de clés Diffie-Hellman.

Une version interactive d'un protocole d'échange de clés est illustrée en Figure 2. Selon ce protocole, un premier dispositif source de données 21 (aussi appelé première source de données) et un deuxième dispositif source de données 22 (aussi appelé deuxième source de données) échangent des données pour établir une clé secrète partagée K. Pour ce faire, lors des étapes 211 et 221, le premier dispositif source de données 21 crée une valeur P1 et le deuxième dispositif source de données 22 crée une deuxième valeur P2. Selon le protocole d'échange de clés Diffie-Hellman, ces valeurs peuvent correspondre à P1 = g^{a} et P2 = g^{b}, a et b étant des valeurs aléatoires et g un générateur d'un groupe fini. Lors des étapes 231, 232, le premier dispositif source de données 21 envoie la valeur P1 au deuxième dispositif source de données 22 et le deuxième dispositif source de données 22 envoie la valeur P2 au premier dispositif source de données. Ces étapes sont suivies d'une étape de calcul de la clé secrète partagée K respectivement dans le premier et dans le deuxième dispositifs source de données (étapes 212 et 222). En particulier, le premier dispositif source de données 21 calcule la clé secrète partagée K sur la base de sa propre valeur P1 et de la valeur reçue P2. Selon le protocole Diffie-Hellman, la clé secrète partagée K peut être calculée selon la formule K = (g^{a})^{b}. Le deuxième dispositif source de données 22, quant à lui, calcule la clé secrète partagée K sur la base de sa propre valeur P2 et de la valeur P1 reçue. Selon le protocole Diffie-Hellman, la clé secrète partagée K peut être calculée selon la formule K = (g^{b})^{a}. Les deux dispositifs source de données détiennent alors une clé secrète partagée qui peut être utilisée pour des opérations de chiffrement ultérieures.

Dans une variante de ce protocole interactif d'échange de clés appelée "protocole non interactif", les deux dispositifs source de données n'échangent pas directement les valeurs P1 et P2 mais publient ces valeurs dans un registre public. Ainsi, le premier dispositif source de données 21 publie sa valeur P1 dans le registre public et récupère la valeur P2 du deuxième dispositif source de données 22 dans ce registre public, et le deuxième dispositif source de données 22 publie sa valeur P2 dans le registre public et récupère la valeur P1 du premier dispositif source de données 21 dans ce registre public. Les autres étapes du protocole sont analogues à la version interactive du protocole d'échange de clés illustrées à la Figure 2. En outre, une combinaison de ces protocoles peut être envisagée.

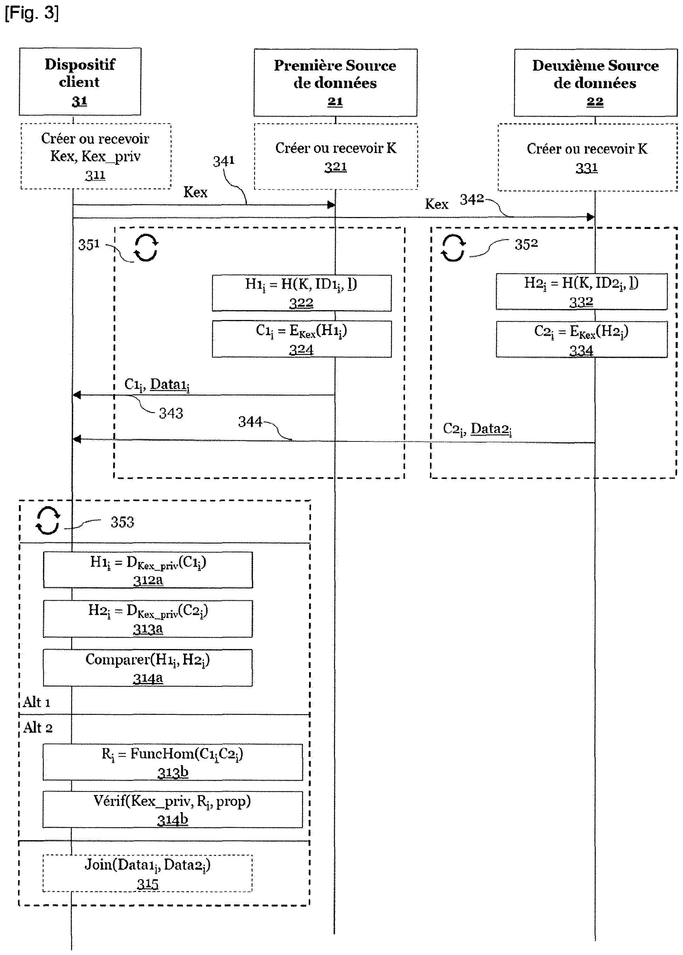

En référence aux Figures 3 à 5, il est illustré différents procédés d'évaluation de correspondance et de combinaison de deux ou plusieurs ensembles de données structurées reçues en provenance de deux ou plusieurs dispositifs source de données. Sur ces figures, les blocs en pointillés et les paramètres soulignés se réfèrent à des caractéristiques optionnelles qui ne sont pas indispensables à l'évaluation de correspondance et la combinaison d'ensembles de données structurées.

La **Figure 3** illustre l'évaluation de correspondance et la combinaison d'ensembles de données structurées reçues en provenance de deux dispositifs source de données selon un premier mode de réalisation de l'invention. Dans ce mode de réalisation, le chiffrement des identifiants au niveau des dispositifs source de données est effectué par un mécanisme de chiffrement par clé publique. L'utilisation d'un mécanisme de chiffrement par clé publique rend le mécanisme particulièrement flexible et évolutif.

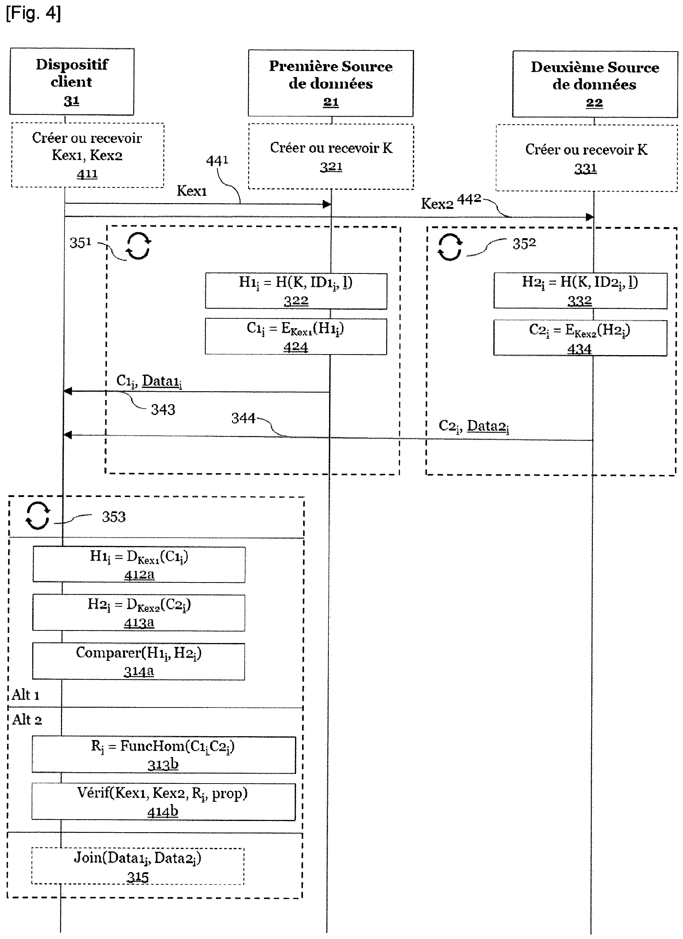

Dans le mode de réalisation particulier de la Figure 3, un premier dispositif source de données 21 (aussi appelé "première source de données") et un deuxième dispositif source de données 22 (aussi appelé "deuxième source de données") fournissent à un dispositif client 31 aussi appelé "dispositif consommateur" des ensembles de données structurées comprenant des identifiants. On notera que, bien que la Figure 3 illustre, tout comme les Figures 4 à 7, deux dispositifs source de données, il est possible de prévoir un plus grand nombre de dispositifs source de données fournissant des ensembles de données structurées au dispositif client 31.

Lors des étapes 321 et 331, le premier et le deuxième dispositifs source de données créent ou reçoivent une clé secrète partagée K. La clé secrète partagée K peut par exemple être créée par l'un des protocoles précédemment décrits en référence à la Figure 2. En variante, la clé secrète partagée K peut être fournie aux dispositifs source de données 21 et 22 par un tiers, par exemple un tiers de confiance gérant les clés des dispositifs source de données.

En outre, le dispositif client 31 peut créer ou recevoir lors de l'étape 311, des clés Kex et Kex_priv. Dans le mode de réalisation décrit, les clés Kex et Kex_priv constituent une paire clé publique/clé privée d'un mécanisme de chiffrement à clé publique. De préférence, ce mécanisme possède des propriétés de chiffrement probabiliste. Les propriétés de chiffrement probabiliste font en sorte que chaque fois qu'un même message est chiffré, un résultat chiffré différent est obtenu. Ceci est obtenu par exemple, par l'introduction d'une valeur aléatoire dans le processus de chiffrement. Selon un mode de réalisation particulier de l'invention, il est utilisé un algorithme de chiffrement à clé asymétrique tel que l'algorithme de chiffrement EIGamal, qui présente des propriétés de chiffrement probabiliste.

Le dispositif client 31 peut par exemple créer localement les clés Kex et Kex_priv, ou les recevoir d'une infrastructure de confiance délivrant et/ou gérant les clés pour le compte du dispositif client 31. D'autres types d'infrastructure de distribution de clés peuvent être également envisagés.

Selon un autre mode de réalisation, la clé Kex, aussi dénommée clé de chiffrement Kex, peut être échangée entre le dispositif client 31 et les premier et deuxième dispositifs source de données 21, 22. Cet échange de la clé de chiffrement Kex peut être effectué de différentes manières.

Par exemple, lors des étapes 341 et 342, la clé de chiffrement Kex peut être envoyée par le dispositif client 31 au premier et au deuxième dispositif source de données 21, 22. Selon une variante de réalisation, la clé de chiffrement Kex peut être publiée dans un registre public et reçue ou récupérée par les premier et deuxième dispositifs source de données 21, 22. Une combinaison de ces deux protocoles d'échange de clés, ou l'utilisation de protocoles d'échange de clés différents, peuvent être également envisagées.

Ensuite, les dispositifs source de données 21, 22 préparent l'envoi d'ensembles de données structurées au dispositif client 31. L'ensemble de données structurées de chaque dispositif source de données 21, 22 comprend au moins un identifiant. En outre, les ensembles de données structurées peuvent aussi comprendre des données associées à l'au moins un identifiant de l'ensemble de données structurées du premier et/ou du deuxième dispositif(s) source de données 21, 22.

Pour être sûr que le dispositif client 31 ne puisse à aucun moment lire en clair les identifiants envoyés par les dispositifs source de données 21, 22, les identifiants sont rendus anonymes au niveau des dispositifs source de données 21, 22. Cette opération est effectuée par utilisation d'une fonction de hachage, qui est une fonction non injective qui à partir d'une donnée de taille arbitraire et souvent de grande taille va renvoyer une valeur de taille limitée ou fixe appelée empreinte numérique. Dans la mesure où une fonction de hachage est déterministe - ce qui signifie que pour une valeur d'entrée donnée il génère toujours la même empreinte numérique -, les empreintes numériques ne sont pas protégées à l'encontre d'attaques de type dictionnaire, c'est-à-dire d'attaques par force brute permettant de casser un chiffrement en tentant de déterminer la valeur en clair au moyen de diverses possibilités connues, telles que des mots d'un dictionnaire. De fait, une entité frauduleuse peut opérer des attaques de type dictionnaire et retrouver les identifiants en clair. Une telle entité frauduleuse peut agir comme faux dispositif source de données délivrant de fausses informations au dispositif client 31, ou comme faux dispositif client susceptible d'utiliser les identifiants en clair pour obtenir plus de renseignements sur les informations reçues par les dispositifs source de données 21, 22. En outre, d'autres dispositifs source de données, connaissant déjà les identifiants en clair mais qui, bien que non autorisées à délivrer des informations à un dispositif client, pourraient se faire passer pour l'un des dispositifs source de données 21, 22 afin de délivrer de fausses informations au dispositif client 31.

Pour assurer une protection à l'encontre des attaques de type dictionnaire ou par usurpation de l'identité d'une source de données, la fonction de hachage utilise la clé secrète K partagée entre les dispositifs source de données autorisées 21, 22 pour générer une empreinte numérique. La clé secrète partagée K est utilisée en tant que "sel" et assure également une protection à l'encontre des dispositifs source de données qui ne sont pas en possession de la clé secrète partagée K.

En outre, pour restreindre ou spécifier les opérations d'évaluation de correspondance et/ou de combinaison permises à un dispositif client 31, la fonction de hachage peut être exécutée avec comme paramètre un label I, aussi appelé valeur fonctionnelle donnée. Un label peut-être par exemple une chaine de caractères qui sera concaténée à l'identifiant avant de réaliser la fonction de hachage. Ainsi, il est possible d'utiliser un premier label pour créer une première empreinte numérique qui sera différente d'une deuxième empreinte numérique créée en utilisant un deuxième label différent du premier. Toutefois, selon un mode de réalisation de l'invention, les deux dispositifs source de données 21, 22 doivent utiliser le même label pour permettre à un dispositif client 31 d'effectuer une opération sur les ensembles de données structurées reçues des dispositifs source de données 21, 22. L'utilisation de labels permet aussi d'assurer une plus grande flexibilité en ce qui concerne les données pouvant faire l'objet d'une évaluation de correspondance et de combinaison par le dispositif client 31. En effet, ce label peut être utilisé pour spécifier les identifiants. Par exemple, des identifiants du premier dispositif source de données 21 et du deuxième dispositif source de données 22 relatifs à des données de l'année 2019 peuvent recevoir un label "2019" et des identifiants relatifs à des données de l'année 2020 peuvent recevoir un label "2020". Dès lors, le dispositif client 31 peut effectuer des opérations sur les identifiants ainsi reçus relatifs uniquement par exemple à des données de l'année 2019 du premier dispositif source de données 21 et du deuxième dispositif source de données 22 qui portent le label "2019" ou à des données de l'année 2020 du premier dispositif source de données 21 et du deuxième dispositif source de données 22 qui portent le label "2020", mais le dispositif client 31 ne peut pas effectuer d'opérations sur des données de l'année 2019 du premier dispositif source de données 21 avec des données de l'année 2020 du deuxième dispositif source de données 22, car les empreintes numériques relatifs à un même identifiant mais ayant un label différent, ne concorderont pas.

De façon plus générale, l'utilisation de labels permet de restreindre les opérations à certains sous-ensembles des ensembles de données structurées des dispositifs source de données. En outre, l'utilisation de labels augmente la sécurité des identifiants car, même si des informations sont connues sur des empreintes numériques calculées avec un label donné, il n'est pas possible de retrouver des informations sur des empreintes numériques calculées avec des labels différents.

Dans l'exemple particulier de la Figure 3, lors de l'étape 322, le premier dispositif source de données 21 génère une première empreinte numérique H1₁ en appliquant une fonction de hachage ayant pour paramètre un premier identifiant ID1₁ du premier dispositif source de données, la clé secrète partagée K et optionnellement un label I (H1₁ = H(K, ID1₁, I)). Lors de l'étape 332, le deuxième dispositif source de données 22 génère une deuxième empreinte numérique H2₁ en appliquant une fonction de hachage ayant pour paramètre un deuxième identifiant ID2₁ du deuxième dispositif source de données, la clé secrète partagée K et optionnellement un label I (H2₁= H(K, ID2₁, I)).

Ensuite, les empreintes numériques H1₁, H2₁, sont chiffrées de telle manière que seul le dispositif client 31 puisse accéder aux empreintes numériques et les utiliser pour effectuer des opérations.

Ainsi, dans l'exemple particulier de la Figure 3, le premier dispositif source de données 21 génère une première empreinte numérique chiffrée C1₁ à l'étape 324 à partir de la première empreinte numérique H1₁ du premier dispositif source de données et de la clé de chiffrement Kex (C1 = E_{Kex}(H1₁)), et le deuxième dispositif source de données 22 génère une deuxième empreinte numérique chiffrée C2₁ à l'étape 334 à partir de la deuxième empreinte numérique H2₁ du deuxième dispositif source de données et de la même clé de chiffrement Kex (C2₁ = E_{Kex}(H2₁)).

Comme indiqué plus haut, outre les empreintes numériques chiffrées C1₁, C2₁, les ensembles de données structurées envoyées au dispositif client 31 peuvent aussi comprendre des données Data1₁, Data2₁ associées aux empreintes numériques chiffrées. Par exemple, le premier dispositif source de données 21 peut comprendre des données Data1₁ associées à la première empreinte numérique chiffrée C1₁, et/ou le deuxième dispositif source de données 22 peut comprendre des données Data2₁ associées à la deuxième empreinte numérique chiffrée C2₁.

Pour assurer une sécurité accrue des données Data1₁, Data2₁ envoyées, ces données peuvent également être chiffrées. Ceci est particulièrement important lorsque les données Data1₁, Data2₁ comprennent des informations sensibles et/ou personnelles. Le chiffrement des données Data1₁, Data2₁ peut être effectué en utilisant la même clé de chiffrement Kex que celle qui a déjà été utilisée pour chiffrer des empreintes numériques. En variante, il est possible d'utiliser une clé de chiffrement différente. Par exemple, un chiffrement symétrique différent peut être utilisé pour chiffrer les données afin d'améliorer les performances, dans la mesure où le chiffrement/déchiffrement symétrique est généralement plus rapide que le chiffrement/déchiffrement asymétrique.

Selon un mode de réalisation particulier, lorsque l'ensemble de données structurées du premier dispositif source de données 21 comprend une pluralité d'identifiants et s'ils existent des données associées, les étapes de génération d'empreinte numérique et de chiffrement (étapes 322 et 324) sont répétées pour chaque identifiant et pour chaque données associées (si les données associées doivent être chiffrées). Cette itération des étapes 322 et 324 est illustrée à la figure 3 par le signe référencé 351.

Les éléments ou valeurs qui changent d'une itération à la suivante sont référencés par un indice i. Comme la réitération de ces étapes n'a lieu que lorsqu'il y a une pluralité d'identifiants et de données associées (s'ils existent), les indices respectifs des éléments et valeurs sont soulignés afin d'indiquer leur caractère optionnel. Les mêmes remarques s'appliquent au deuxième dispositif source de données 22, le signe de répétition étant référencé 352.

Ensuite, l'ensemble de données structurées du premier dispositif source de données 21 est envoyé au dispositif client 31 (étape 343). En particulier, le premier dispositif source de données 21 envoie au dispositif client 31 la première empreinte numérique chiffrée C1₁ et éventuellement les données associées Data1₁. Lorsque l'ensemble de données structurées comprend une pluralité d'empreintes chiffrées, ces derniers ainsi que les données associées Data1ᵢ (s'ils existent) sont envoyés au dispositif client 31 à l'étape 343 en tant que premier ensemble de données structurées.

Les mêmes remarques s'appliquent au deuxième dispositif source de données 22, qui envoie au dispositif client 31 la deuxième empreinte numérique chiffrée C2₁ et éventuellement les données associées Data2₁ formant le deuxième ensemble de données structurées (étape 344). Lorsque l'ensemble de données structurées comprend une pluralité d'empreintes numériques chiffrées, ces derniers ainsi que les données associées Data2ᵢ (s'ils existent) sont envoyés au dispositif client 31 à l'étape 344 en tant que deuxième ensemble de données structurées.

À l'étape suivante, le dispositif client 31 reçoit le premier et le deuxième ensemble de données structurées comprenant les empreintes numériques chiffrées C1₁, C2₁ et éventuellement les données associées Data1₁, Data2₁ ou, en cas de pluralité d'empreintes numériques chiffrées, la pluralité d'identifiants chiffrés C1ᵢ, C2ᵢ et une pluralité de données associées Data1ᵢ, Data2ᵢ. Selon une alternative de réalisation, le premier dispositif source de données 21 envoie une première empreinte numérique C1₁ (incluant éventuellement des données associée Data1₁), et le deuxième source dispositif de données 22 envoie une pluralité d'empreintes numériques chiffrées C2₁ (avec éventuellement une pluralité des données associées Data2₁) ou *vice versa.*

Pour vérifier que l'identifiant du premier dispositif source de données 21 correspond à l'identifiant du deuxième dispositif source de données 22, le dispositif client 31 compare les empreintes numériques chiffrées C1₁ et C2₁.

Selon une première variante de réalisation Alt1, la comparaison comprend le déchiffrement des empreintes numériques chiffrées C1₁, C2₁ par le dispositif client 31 afin d'obtenir les empreintes numériques H1₁, H2₁ (étapes 312a, 313a). Pour ce faire, à l'étape 312a, le dispositif client 31 déchiffre la première empreinte numérique chiffrée C1₁ au moyen de la clé privée Kex_priv, afin d'obtenir la première empreinte numérique H1₁ du premier dispositif source de données 21, et à l'étape 313a, le dispositif client 31 déchiffre la deuxième empreinte numérique chiffrée C2₁ au moyen de la clé privée Kex_priv, afin d'obtenir la deuxième empreinte numérique H2₁ du deuxième dispositif source de données 22. Lors de l'étape suivante, le dispositif client 31 compare les empreintes numériques H1₁, H2₁ afin de déterminer si les identifiants ID1₁, ID2₁ sont ou non identiques (étape 314a). Si les empreintes numériques H1₁, H2₁ sont identiques (H1₁ = H2₁), alors il est déterminé que les identifiants ID1₁ et ID2₁ sont aussi identiques (ID1₁ = ID2₁).

Selon une autre variante de réalisation Alt2, la comparaison comprend l'utilisation d'une fonction homomorphe. Cette variante peut être utilisée lorsque les empreintes numériques chiffrées ont été chiffrés au moyen d'un même algorithme de chiffrement ayant des propriétés d'homomorphisme. Les propriétés d'homomorphisme autorisent des calculs sur des textes chiffrés, avec génération d'un résultat chiffré qui, lorsqu'il est déchiffré, concorde avec le résultat des opérations de la même manière que si elles avaient été effectuées sur le texte en clair (par exemple C(ID1) + C(ID2) = C(ID1+ID2)). L'utilisation d'un algorithme de chiffrement ayant des propriétés d'homomorphisme procure l'avantage que les empreintes numériques chiffrées C1₁, C2₁ n'ont pas besoin d'être déchiffrés, ce qui peut améliorer la sécurité et le temps de traitement.

L'exemple ci-dessous illustre un mécanisme de chiffrement homomorphe mis en œuvre par deux dispositifs source de données :
Premier dispositif source de données :
   Première clé de chiffrement : 11
   ID : 1, prénom : Jean ; ID chiffré : 1 + 11 = 12
   ID : 2, prénom : Paul ; ID chiffré : 2 + 11 = 13
   ID : 3, prénom : Monsieur ; ID chiffré : 3 + 11 = 14
Deuxième dispositif source de données :
   Deuxième clé de chiffrement : 20
   ID : 2, nom : Dupont ; ID chiffré : 2 + 20 = 22
   ID : 4, nom : Martin ; ID chiffré : 4 + 20 = 24
   ID : 5, nom : Durand ; ID chiffré : 5 + 20 = 25

Les enregistrements du premier dispositif source de données comprennent chacun un identifiant ID et un prénom. Le premier dispositif source de données possède en outre une première clé de chiffrement qui est utilisée pour chiffrer les identifiants ID afin de produire des identifiants ID chiffrés. Les enregistrements du deuxième dispositif source de données comprennent chacun un identifiant ID et un nom de famille. Le deuxième dispositif source de données possède également une deuxième clé de chiffrement, qui est utilisée pour chiffrer les identifiants ID afin de produire des identifiants ID chiffrés.

Les identifiants ID chiffrés peuvent ultérieurement être vérifiés par un dispositif client grâce à une opération homomorphe et une clé spécifique comme suit :
Dispositif client :
Clé spécifique: 9
ID chiffrée du deuxième dispositif source de données 22 - ID chiffrée du premier dispositif source de données 13 = 9.

Dans cet exemple, l'opération homomorphe est une soustraction, le résultat pouvant être comparé à la clé spécifique. La clé spécifique est déterminée par exemple à partir des clés de chiffrement. Par exemple, la clé spécifique est créée par différence des deux clés de chiffrement (20 - 11 = 9). Si le résultat de l'opération et la clé spécifique sont identiques, alors il est déterminé que les identifiants ID chiffrées sont identiques. Les données associées à ces identifiants peuvent être ainsi jointes, ce qui conduit au nom "Paul Dupont".

Dans l'exemple de la Figure 3, le dispositif client exécute l'étape de comparaison en appliquant d'une part la fonction homomorphe à l'étape 313b en utilisant les empreintes numériques chiffrées C1₁ et C2₁ pour produire un résultat R₁. Cette fonction homomorphe peut comprendre une soustraction, une addition, une multiplication et/ou une division, etc.

Ensuite, l'étape de comparaison applique d'autre part une fonction permettant de déterminer si le résultat R₁ vérifie ou non une propriété prédéfinie prop en utilisant la clé privée Kex_priv du dispositif client 31 (étape 314b). Si le résultat vérifie la propriété prédéfinie prop, alors les identifiants ID1₁ et ID1₂ sont identiques.

La propriété prédéfinie prop peut comprendre une valeur spécifique, par exemple 0 ou 1, et l'étape de vérification (étape 314b) peut comprendre le déchiffrement du résultat R₁ et la comparaison du résultat déchiffré R₁ à la valeur spécifique. Par exemple, si le résultat déchiffré R₁ est égal à la valeur spécifique, alors les identifiants ID1₁ et ID2₁ sont identiques. Dans le cas contraire, les identifiants ID1₁ et ID2₁ ne sont pas identiques. Selon une variante de réalisation, un algorithme de chiffrement EIGamal présentant des propriétés d'homomorphisme à l'égard des multiplications et des divisions, peut être utilisé pour évaluer si un résultat vérifie une propriété prédéfinie prop, par exemple est égal à une valeur prédéfinie.

Si le dispositif client 31 a déterminé que les identifiants ID1₁ et ID2₁ sont identiques, alors les dispositifs source de données 21 et 22 comprennent un enregistrement ayant respectivement l'identifiant ID1₁ et l'identifiant ID2₁ qui sont identiques. En fonction de cette évaluation, des opérations ultérieures peuvent être réalisées.

Par exemple, le dispositif client 31 peut utiliser les identifiants identiques ID1₁, ID2₁ pour effectuer une opération de combinaison (jointure) (étape 315) afin de générer un ensemble de jointure. Les différentes possibilités d'opération de jointure ont été précédemment présentées au regard de la Figure 1, et peuvent être également appliquées aux données Data1₁, Data2₁ reçues du premier et du deuxième dispositif source de données 21, 22, respectivement.

Si une pluralité d'empreintes numériques chiffrées C1ᵢ C2ᵢ sont reçus par le dispositif client 31, ce dernier peut exécuter l'étape de comparaison pour la pluralité d'empreintes numériques chiffrées C1ᵢ, C2ᵢ. En outre, si une pluralité de données Data1ᵢ, Data2ᵢ associées aux identifiants chiffrés C1ᵢ, C2ᵢ sont reçues par le dispositif client 31, ce dernier peut effectuer les opérations de jointure sur la pluralité de données Data1ᵢ, Data2ᵢ. Une telle itération pour une pluralité d'empreintes numériques chiffrées C1ᵢ, C2ᵢ et éventuellement des données Data1ᵢ, Data2ᵢ est illustrée par le signe référencé 353.

La **Figure 4** illustre un procédé d'évaluation de correspondance et de combinaison d'ensembles de données structurées reçues en provenance de dispositifs source de données selon un deuxième mode de réalisation de l'invention.

Dans ce mode de réalisation, le chiffrement des identifiants au niveau des dispositifs source de données est effectué par un mécanisme de chiffrement symétrique, les dispositifs source de données utilisant des clés distinctes. L'utilisation d'un mécanisme de chiffrement symétrique procure l'avantage de pouvoir effectuer les processus de chiffrement et de déchiffrement avec un temps de traitement réduit, par rapport aux mécanismes de chiffrement à clé publique.

Cependant, les mécanismes de chiffrement symétrique sont généralement des mécanismes de chiffrement déterministe. Dans un tel mécanisme, chaque fois qu'un même message est chiffré, le même texte chiffré résultant est obtenu. De fait, en comparant (sans être en possession de la clé de déchiffrement) des textes chiffrés résultants, il est possible de déterminer que le même texte original en clair a été chiffré en deux textes chiffrés identiques. Le texte en clair ne peut cependant pas être retrouvé sans la clé de déchiffrement. Ainsi, avec un mécanisme de chiffrement symétrique où chacune des sources de données utilise une même clé de chiffrement et produit des identifiants chiffrés identiques, un tiers peut aisément effectuer une opération d'évaluation de correspondance et/ou d'autres opérations (notamment des opérations de combinaison) sans connaître la clé de déchiffrement et donc sans autorisation. Pour pallier ce risque, le deuxième mode de réalisation utilise des clés distinctes pour chaque source de données, ce qui procure l'avantage supplémentaire de ne pas avoir de valeur aléatoire additionnelle à échanger pour être sûr que les valeurs chiffrées provenant des différents dispositifs source de données ne soient pas identiques.

On ne décrira en détail ci-après que les étapes qui diffèrent de celles du premier mode de réalisation. Pour le reste, on renverra au premier mode de réalisation.

À l'étape 411, le dispositif client 31 crée ou reçoit une première et une deuxième clés symétriques Kex1, Kex2 respectivement pour chaque dispositif source de données 21, 22. Les clés peuvent être créées localement, ou peuvent provenir d'un registre des clés situé à distance du dispositif client 31. Ensuite, le dispositif client 31 envoie la première clé symétrique Kex1 au premier dispositif source de données 21 (étape 441), et la deuxième clé symétrique Kex2 au deuxième dispositif source de données 22 (étape 442). Selon une variante de réalisation, le dispositif client 31, le premier dispositif source de données 21 et le deuxième dispositif source de données 22 peuvent obtenir les clés symétriques respectives Kex1, Kex2 d'une infrastructure de gestion de clés.

À l'étape 424, le premier dispositif source de données 21 chiffre la première empreinte numérique H1₁ du premier dispositif source de données en utilisant la première clé symétrique Kex1 (C1₁ = E_{Kex1} (H1₁)) et, à l'étape 434, le deuxième dispositif source de données 22 chiffre la deuxième empreinte numérique H2₁ du deuxième dispositif source de données en utilisant la deuxième clé symétrique Kex2 (C2₁ = E_{Kex2}(H2₁)).

Selon une première variante de réalisation Alt1, l'étape de comparaison comprend le déchiffrement des empreintes numériques chiffrées C1₁,C2₁ par le dispositif client 31 afin d'obtenir la première et la deuxième empreintes numériques H1₁, H2₁ (étapes 412a et 413a). En particulier, à l'étape 412a, le dispositif client 31 déchiffre la première empreinte numérique chiffrée C1₁ afin d'obtenir la première empreinte numérique H1₁ du premier dispositif source de données 21 en utilisant la première clé symétrique Kex1 et, à l'étape 413a, le dispositif client 31 déchiffre la deuxième empreinte numérique chiffrée C2₁ afin d'obtenir la deuxième empreinte numérique H2₁ du deuxième dispositif source de données 22 en utilisant la deuxième clé symétrique Kex2.

Selon une deuxième variante de réalisation Alt2, l'étape de comparaison comprend l'utilisation de propriétés d'homomorphisme de l'algorithme de chiffrement qui a été utilisé pour chiffrer les empreintes numériques H1₁, H2₁. La vérification 414b est basée sur les clés symétriques Kex1, Kex2, sur le résultat de l'opération homomorphique et sur la propriété prédéfinie prop. Par exemple, une relation spécifique entre les deux clés symétriques Kex1, Kex2 peut être utilisée pour vérifier le résultat de l'opération homomorphique. En particulier, la relation spécifique entre les deux clés symétriques Kex1, Kex2 peut être utilisée pour créer une clé spécifique comme illustré dans l'exemple décrit ci-dessus.

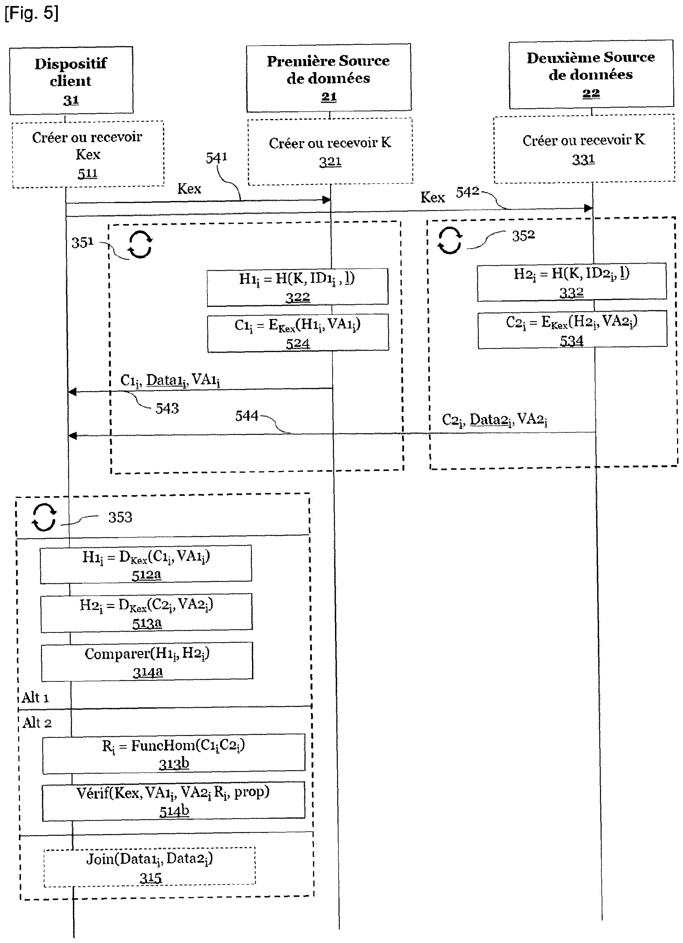

La **Figure 5** illustre un procédé d'évaluation de correspondance et de combinaison d'ensembles de données structurées reçues en provenance de dispositifs source de données selon un troisième mode de réalisation de l'invention.

Dans ce mode de réalisation, le chiffrement des identifiants au niveau des dispositifs source de données est effectué par l'utilisation d'un mécanisme de chiffrement symétrique, chaque dispositif source de données utilisant la même clé qui est rendue aléatoire au moyen d'une valeur qui est spécifique à chaque dispositif source de données. L'utilisation d'un mécanisme de chiffrement symétrique peut procurer l'avantage d'un chiffrement ou d'un déchiffrement avec un temps de traitement réduit par rapport à un mécanisme de chiffrement à clé publique.

Comme dans le cas de la Figure 4, l'utilisation d'une même clé de chiffrement dans un mécanisme de chiffrement déterministe conduit au même texte chiffré résultant. Pour être sûr que seuls des dispositifs clients autorisés soient capables d'effectuer l'évaluation de correspondance et d'autres opérations (notamment des opérations de combinaison), une valeur aléatoire est ajoutée aux empreintes numériques avant leur chiffrement. Ainsi, le chiffrement des mêmes empreintes numériques ne donnera pas la même empreinte numérique chiffrée. Par rapport au deuxième mode de réalisation, le troisième mode de réalisation permet de réduire la complexité à l'égard de la gestion des clés du fait de l'usage d'une clé unique. En outre, il est possible d'accroître la sécurité en utilisant des valeurs aléatoires différentes pour chaque empreinte numérique d'une pluralité d'empreintes numériques. La sécurité accrue a pour résultat que même en présence de deux empreintes numériques identiques dans un même dispositif source de données, par exemple dans le premier dispositif source de données 21, les empreintes numériques chiffrées seront différentes.

Il sera décrit en détail ci-après uniquement les étapes qui diffèrent de celles du premier mode de réalisation. Pour le reste, il est renvoyé au premier mode de réalisation.

À l'étape 511, le dispositif client 31 crée ou reçoit une clé symétrique Kex unique. La clé peut être créée localement ou peut être obtenue d'un registre de clés distant par rapport au dispositif client 31. Ensuite, le dispositif client 31 envoie la clé symétrique unique Kex au premier dispositif source de données 21 et au deuxième dispositif source de données 22 (étapes 541 et 542). Selon une variante de réalisation, le dispositif client 31, le premier dispositif source de données 21 et le deuxième dispositif source de données 22 peuvent obtenir la clé symétrique unique Kex d'une infrastructure de gestion de clés.

À l'étape 524, le premier dispositif source de données 21 chiffre la première empreinte numérique H1₁ du premier dispositif source de données en utilisant la clé symétrique unique Kex et une première valeur aléatoire VA1₁ (C1₁ = E_{Kex}(H1₁,VA1₁)), et à l'étape 534 le deuxième dispositif source de données 22 chiffre la deuxième empreinte numérique H2₁ du deuxième dispositif source de données en utilisant la clé symétrique unique Kex et une deuxième valeur aléatoire VA2₁ (C2₁ = E_{Kex}(H2₁,VA2₁)). Les valeurs aléatoires ajoutent un facteur d'aléa à la valeur chiffrée. Dans certains cas, les valeurs aléatoires peuvent être ajoutées à l'identifiant en clair.

Dans le cas d'une pluralité d'empreintes numériques H1ᵢ et/ou H2ᵢ, le premier dispositif source de données 21 utilise une valeur aléatoire VA1ᵢ différente pour chaque identifiant de la pluralité d'empreintes numériques H1ᵢ, et le deuxième dispositif source de données 22 utilise une valeur aléatoire VA2ᵢ différente pour chaque identifiant de la pluralité d'empreintes numériques H2ᵢ. Cette manière de procéder offre une sécurité accrue au regard du deuxième mode de réalisation de l'invention car, même si deux empreintes numériques identiques (par exemple H1₁ et H1₂) sont présentes dans un même dispositif source de données, par exemple dans le premier dispositif source de données 21, les empreintes numériques chiffrées seront différentes (dans cet exemple, C1₁ ne sera pas égal à C1₂).

Pour effectuer la comparaison au niveau du dispositif client 31, il est nécessaire d'envoyer au dispositif client 31 les valeurs aléatoires (étapes 543 et 544). L'envoi peut avoir lieu en même temps que les empreintes numériques chiffrées C1₁, C2₁, les valeurs aléatoires VA1ᵢ, VA2ᵢ et les données éventuelles Data1₁, Data2₁ en tant que premier et deuxième ensembles de données.

Dans une première variante de réalisation Alt1, la comparaison comprend le déchiffrement des empreintes numériques chiffrées C1₁, C2₁ par le dispositif client 31 afin d'obtenir les empreintes numériques H1₁, H2₁ (étapes 512a et 513a). À l'étape 512a, le dispositif client 31 déchiffre la première empreinte numérique H1₁ du premier dispositif source de données 21 en utilisant la clé symétrique unique Kex et la première valeur aléatoire VA1₁, et à l'étape 513a, le dispositif client 31 déchiffre la deuxième empreinte numérique H2₁ du deuxième dispositif source de données 22 par utilisation de la clé symétrique unique Kex et de la deuxième valeur aléatoire VA2₁.

Dans une deuxième variante de réalisation Alt2, la comparaison comprend l'utilisation des propriétés d'homomorphisme de l'algorithme de chiffrement qui a été utilisé pour chiffrer les empreintes numériques H1₁, H1₂. La vérification 514b est basée sur la clé symétrique unique Kex, sur le résultat de l'opération homomorphe et sur la propriété prédéfinie prop.

Selon un mode de réalisation particulier la vérification est en outre basée sur les deux valeurs aléatoires VA1ᵢ, VA2ᵢ. Selon un autre mode de réalisation, les deux valeurs aléatoires VA1ᵢ, VA2ᵢ peuvent être utilisées à l'étape 313b de la Figure 5 par la fonction homomorphe et/ou à l'étape 514b de vérification.

S'il existe une pluralité d'empreintes numériques H1ᵢ, H2ᵢ et une pluralité de valeurs aléatoires VA1ᵢ, VA2ᵢ, le dispositif client utilise la valeur aléatoire qui est associée à l'empreinte numérique pour effectuer le déchiffrement.

Même si le premier, le deuxième et le troisième modes de réalisation ci-dessus ont été décrits sous forme de modes de réalisation distincts, des combinaisons de ces modes de réalisation sont également possibles.

Par exemple, un premier dispositif source de données 21 peut utiliser une clé publique du dispositif client 31 et un deuxième dispositif source de données peut utiliser une clé spécifique au dispositif source de données ou une clé symétrique commune avec une valeur aléatoire. En général, toutes les combinaisons sont possibles dès lors que le dispositif client 31 à l'information concernant l'algorithme utilisé pour chiffrer les données spécifiques. Cependant, si des mécanismes de chiffrement différents sont utilisés, il n'est pas possible d'utiliser les propriétés d'homomorphisme.

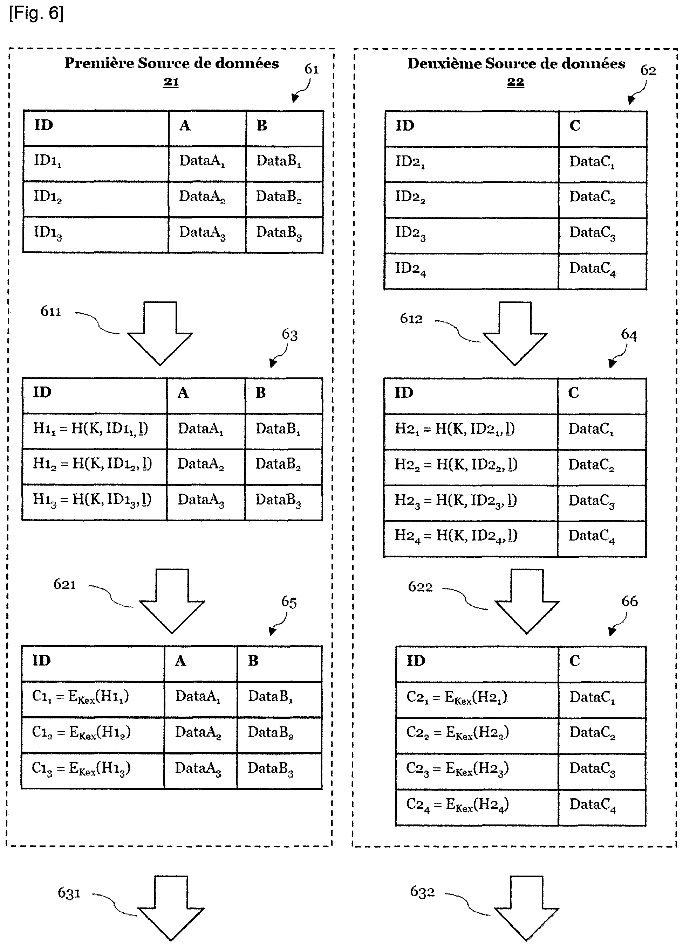

La **Figure 6** illustre les opérations effectuées au niveau de chaque dispositif source de données (aussi appelés sources de données) selon le premier mode de réalisation, dans un exemple où chaque dispositif source de données 21, 22 comprend une pluralité d'identifiants et de données associées.

En particulier, le premier dispositif source de données 21 comprend trois identifiants ID1₁, ID1₂, ID1₃ avec des données associées. Chaque identifiant du premier dispositif source de données 21 possède des données de type A et des données de type B. Par exemple, le premier identifiant ID1₁ est associé aux données DataA₁ et DataB₁.

Les données sont stockées en clair dans la table de données 61. Afin de préparer les ensembles de données structurées à envoyer au dispositif client, une fonction de hachage est appliquée sur les identifiants à l'étape 611 afin de générer une empreinte numérique pour chaque identifiant tel qu'illustré sur la table de données 63. Ensuite, un chiffrement des empreintes numériques est réalisé à l'étape 621 (conformément au procédé décrit à la Figure 3), tel qu'illustré sur la table de données 65.

Selon un mode de réalisation particulier, le premier dispositif source de données peut ne pas stocker en mémoire la table de données 61 mais uniquement la table de données 63 c'est-à-dire une table contenant uniquement les empreintes numériques et non des identifiants en clair. En effet, lorsque les identifiants contiennent des données personnelles, il peut être préférable de stocker seulement la table contenant les empreintes numériques des identifiants, notamment pour se conformer avec des réglementations relatives au stockage de données personnelles.

Dans un tel cas, les dispositifs source de données n'ont plus accès aux identifiants en clair ce qui augmente encore la sécurité.

Le deuxième dispositif source de données 22 comprend quatre identifiants ID2₁, ID2₂, ID2₃, ID2₄ avec des données associées. Chaque identifiant de la deuxième source de données possède des données de type C. Par exemple, le premier identifiant ID2₁ est associé aux données DataC₁. L'ensemble de données structurées est stocké en clair dans la table 62. Afin de préparer l'envoi de l'ensemble de données structurées, une fonction de hachage est appliquée sur les identifiants à l'étape 612 afin de générer une empreinte numérique pour chaque identifiant tel qu'illustré sur la table de données 64. Ensuite, un chiffrement des empreintes numériques est réalisé à l'étape 622, (conformément au procédé décrit à la Figure 3), tel qu'illustré sur la table de données 66.

Après la réalisation de ces étapes, les empreintes numériques chiffrées et les données associées de chacun des dispositifs source de données structurées sous forme d'ensembles de données structurées sont envoyés au dispositif client (étapes 631 et 632).

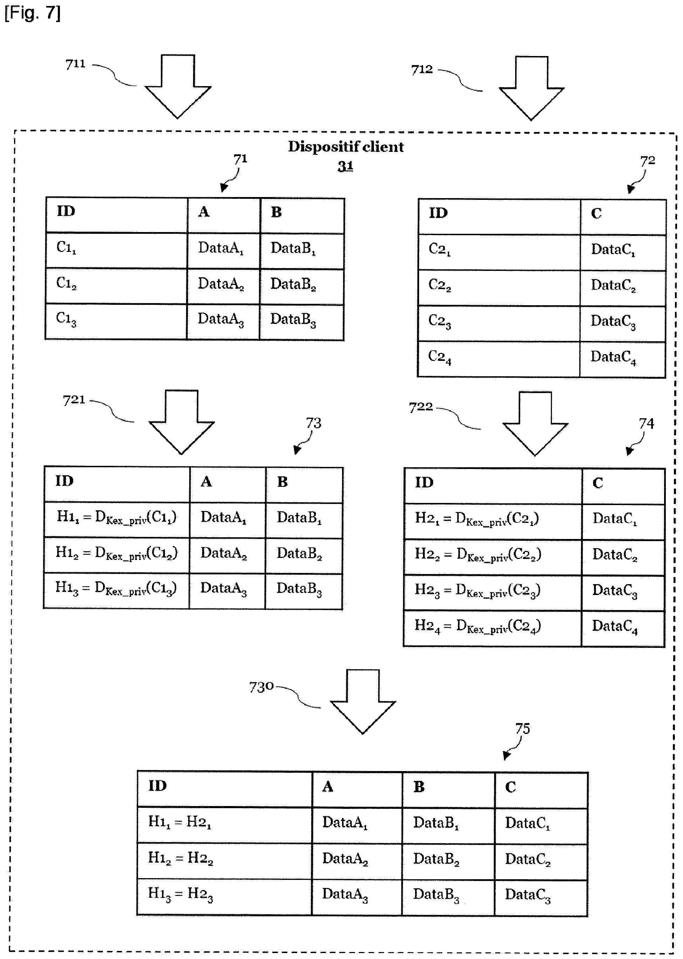

La **Figure 7** illustre les opérations effectuées au niveau du dispositif client, dans le cadre du premier mode de réalisation de l'invention.

Le dispositif client 31 reçoit des ensembles de données structurées de dispositifs source de données, contenant des empreintes numériques chiffrées avec les données associées par exemple sous la forme de tables de données 71, 72 (étapes 711 et 712). Ensuite, le dispositif client 31 déchiffre les empreintes numériques chiffrées afin d'obtenir les empreintes numériques correspondantes (étapes 721 et 722), tel qu'illustré sur les tables de données 73, 74 (conformément au procédé décrit à la Figure 3).

Les empreintes numériques des tables de données 73, 74 sont comparées et combinées de manière à générer un ensemble de jointure, par exemple la table de données 75 à l'étape 730. Dans l'exemple de la Figure 7, une jointure interne (comme expliqué en référence à la Figure 1) est réalisée. Ainsi, il n'y a dans la table de données 75 aucune valeur correspondant à l'identifiant ID2₄ de la table 62 de la Figure 6.

Dans la table de données 75, les empreintes numériques concordantes sont stockées avec les données de type A, de type B et de type C. Le client peut ainsi utiliser les données combinées issues des deux dispositifs source de données.

Le dispositif client 31 et les dispositifs source de données 21, 22 peuvent être des dispositifs informatiques comprenant une mémoire configurée pour stocker des instructions permettant d'exécuter les instructions illustrées aux Figures 2 à 7. De plus, ces dispositifs informatiques peuvent comprendre un ou plusieurs processeurs pour le traitement des instructions stockées en mémoire. Le dispositif client 31 et les dispositifs source de données 21 et 22 peuvent être connectés de manière communicante par l'intermédiaire d'un système de bus ou par un réseau de communication filaire ou sans fil, par exemple par Internet. Dans un exemple, le dispositif client 31, le premier dispositif source de données 21 et/ou le deuxième dispositif source de données 22 peuvent faire partie d'un même dispositif informatique, par exemple d'un même serveur et/ou utiliser un même stockage dématérialisé ("cloud"). Les dispositifs source de données 21, 22 peuvent être des serveurs comprenant un logiciel de gestion de bases de données permettant de stocker les données à envoyer au dispositif client 31.

## Revendications

1. Procédé d'évaluation de correspondance d'un premier ensemble de données structurées provenant d'un premier dispositif source de données (21) avec un deuxième ensemble de données structurées provenant d'un deuxième dispositif source de données (22), mis en œuvre dans un dispositif client (31),
procédé **caractérisé en ce qu'**il comprend les étapes suivantes :
a. échange (341, 342) d'une clé de chiffrement (Kex) entre le dispositif client (31), le premier dispositif source de données (21) et le deuxième dispositif source de données (22) ;
b. réception (343) du premier ensemble de données structurées provenant du premier dispositif source de données, le premier ensemble de données structurées comprenant une première empreinte numérique chiffrée (C1ᵢ) générée à partir d'une première empreinte numérique (H1ᵢ) et de la clé de chiffrement (Kex), la première empreinte numérique (H1ᵢ) étant générée à partir d'un premier identifiant en clair (ID1ᵢ) et d'une clé secrète (K) qui est partagée entre le premier et le deuxième dispositif source de données ;
c. réception (344) du deuxième ensemble de données structurées provenant du deuxième dispositif source de données, le deuxième ensemble de données structurées comprenant une deuxième empreinte numérique chiffrée (C2ᵢ) générée à partir d'une deuxième empreinte numérique (H2ᵢ) et de la clé de chiffrement (Kex), la deuxième empreinte numérique (H2ᵢ) étant générée à partir d'un deuxième identifiant en clair (ID2ᵢ) et de la clé secrète partagée (K) ;
d. comparaison de la première empreinte numérique chiffrée (C1ᵢ) du premier ensemble de données structurées avec la deuxième empreinte numérique chiffrée (C2ᵢ) du deuxième ensemble de données structurées afin de déterminer si le premier identifiant en clair (ID1ᵢ) est identique au deuxième identifiant en clair (ID2ᵢ) sans avoir accès au premier et au deuxième identifiants en clair (ID1ᵢ ID2ᵢ), la première empreinte numérique chiffrée (C1ᵢ) du premier ensemble de données structurées ayant une valeur différente de la deuxième empreinte numérique chiffrée (C2i) du deuxième ensemble de données structurées.

2. Procédé selon la revendication 1, **caractérisé en ce que** la clé de chiffrement (Kex) est une clé publique du dispositif client (31).

3. Procédé selon la revendication 2, **caractérisé en ce que** l'étape de comparaison est basée sur le déchiffrement de la première empreinte numérique chiffrée (C1i) du premier ensemble de données structurées et de la deuxième empreinte numérique chiffrée (C2i) du deuxième ensemble de données structurées au moyen d'une clé privée du dispositif client.

4. Procédé selon la revendication 1, **caractérisé en ce que** la clé de chiffrement (Kex) comprend une première clé symétrique (Kex1) échangée entre le dispositif client et le premier dispositif source de données (21) et une deuxième clé symétrique (Kex2) échangée entre le dispositif client et le deuxième dispositif source de données (22) ;
la clé de chiffrement (Kex1) utilisée pour générer la première empreinte numérique chiffrée (C1ᵢ) du premier ensemble de données structurées est la première clé symétrique et
la clé de chiffrement (Kex2) utilisée pour générer la deuxième empreinte numérique chiffrée (C2ᵢ) du deuxième ensemble de données structurées est la deuxième clé symétrique.

5. Procédé selon la revendication 4, **caractérisé en ce que** l'étape de comparaison est basée sur le déchiffrement de la première empreinte numérique chiffrée (C1ᵢ) du premier ensemble de données structurées au moyen de la première clé symétrique et sur le déchiffrement de la deuxième empreinte numérique chiffrée (C2ᵢ) du deuxième ensemble de données structurées au moyen de la deuxième clé symétrique.

6. Procédé selon la revendication 1, **caractérisé en ce que** la clé de chiffrement (Kex) est une clé symétrique partagée entre le dispositif client (31), le premier dispositif source de données (21) et le deuxième dispositif source de données (22) ;
la première empreinte numérique chiffrée (C1ᵢ) du premier ensemble de données structurées est en outre généré à partir d'une première valeur aléatoire (VA1ᵢ) et le premier ensemble de données structurées comprend en outre la première valeur aléatoire (VA1ᵢ) ;
la deuxième empreinte numérique chiffrée (C2ᵢ) du deuxième ensemble de données structurées est en outre généré à partir d'une deuxième valeur aléatoire (VA2ᵢ) et le deuxième ensemble de données structurées comprend en outre la deuxième valeur aléatoire (VA2ᵢ) ;
l'étape de comparaison étant réalisée en outre au moyen de la première et de la deuxième valeurs aléatoires (VA1ᵢ, VA2ᵢ).

7. Procédé selon la revendication 6, **caractérisé en ce que** l'étape de comparaison est basée sur le déchiffrement de la première empreinte numérique chiffrée (C1ᵢ) du premier ensemble de données structurées au moyen de la première valeur aléatoire (VA1ᵢ) et de la clé symétrique partagée et sur le déchiffrement de la deuxième empreinte numérique chiffrée (C2ᵢ) du deuxième ensemble de données structurées au moyen de la deuxième valeur aléatoire (VA2ᵢ) et de la clé symétrique partagée.

8. Procédé selon l'une des revendications 2, 4 ou 6, **caractérisé en ce que** l'étape de comparaison est basée sur une propriété homomorphique d'un algorithme de chiffrement utilisé pour générer la première empreinte numérique chiffrée du premier ensemble de données structurées et pour générer la deuxième empreinte numérique chiffrée du deuxième ensemble de données structurées.

9. Procédé selon la revendication 1, **caractérisé en ce que** la première empreinte numérique (H1ᵢ) est générée en outre à partir d'une valeur fonctionnelle donnée (I), cette valeur fonctionnelle donnée (I) définissant les fonctions possibles d'utilisation de la clé secrète partagée (K) ; et
la deuxième empreinte numérique (H2ᵢ) est générée en outre à partir de la valeur fonctionnelle donnée (I).

10. Procédé selon la revendication 8, **caractérisé en ce que** l'étape de comparaison comprend une opération homomorphique de la première empreinte numérique chiffrée (C1ᵢ) du premier ensemble de données structurées avec la deuxième empreinte numérique chiffrée (C2ᵢ) du deuxième ensemble de données structurées.

11. Procédé selon la revendication 1, **caractérisé en ce que**
le premier et/ou le deuxième ensemble de données structurées comprennent en outre, des données associées (Data1ᵢ, Data2ᵢ) à la première empreinte numérique chiffrée (C1ᵢ) du premier ensemble de données structurées et à la deuxième empreinte numérique chiffrée (C2ᵢ) du deuxième ensemble de données structurées ;
le procédé comprend une étape d'insertion dans un ensemble de jointure, des données (Data1ᵢ) associées à la première empreinte numérique chiffrée (C1ᵢ) du premier ensemble de données structurées et/ou des données (Data2ᵢ) associées à la deuxième empreinte numérique chiffrée (C2ᵢ) du deuxième ensemble de données structurées lorsque le résultat de l'étape de comparaison détermine que le premier identifiant en clair (ID1ᵢ) est identique au deuxième identifiant en clair (ID2ᵢ).

12. Procédé selon la revendication 1, **caractérisé en ce que** le premier ensemble de données structurées comprend une pluralité de premières empreintes numériques chiffrées (C1ᵢ) et /ou le deuxième ensemble de données structurées comprend une pluralité de deuxièmes empreintes numériques chiffrées (C2ᵢ),
l'étape de comparaison est réalisée pour une ou plusieurs premières empreintes numériques chiffrées (C1ᵢ) du premier ensemble de données structurées et une ou plusieurs deuxièmes empreintes numériques chiffrées (C2ᵢ) du deuxième ensemble de données structurées.

13. Procédé selon la revendication 11, **caractérisé en ce que** le premier ensemble de données structurées comprend une pluralité de premières empreintes numériques chiffrées (C1ᵢ) et /ou le deuxième ensemble de données structurées comprend une pluralité de deuxièmes empreintes numériques chiffrées (C2ᵢ),
l'étape de comparaison et l'étape d'insertion dans un ensemble de jointure sont exécutées pour une ou plusieurs premières empreintes numériques chiffrées (C1ᵢ) du premier ensemble de données structurées et une ou plusieurs deuxièmes empreintes numériques chiffrées (C2ᵢ) du deuxième ensemble de données structurées.

14. Procédé de fourniture d'un ensemble de données structurées à un dispositif client (31), mis en œuvre dans un dispositif source de données (21), le procédé comprenant les étapes suivantes :
i. échange (341) d'une clé de chiffrement (Kex) entre le dispositif client (31), le dispositif source de données (21) et un deuxième dispositif source de données (22) ;
ii. création d'une empreinte numérique (H1i) à partir d'un identifiant en clair (ID1i) et d'une clé secrète (K) qui est partagée avec le deuxième dispositif source de données (22),
iii. génération d'une empreinte numérique chiffrée (C1ᵢ) à partir de l'empreinte numérique (H1ᵢ) et de la clé de chiffrement (Kex),
iv. envoi au dispositif client d'un ensemble de données structurées (343) comprenant l'empreinte numérique chiffrée (C1ᵢ) afin de réaliser une évaluation de correspondance avec un autre ensemble de données structurées provenant du deuxième dispositif source de données.

15. Dispositif configuré pour mettre en œuvre le procédé selon l'une des revendications 1 à 13 ou le procédé selon la revendication 14.
